# EUROPEAN PATENT SPECIFICATION

(11) **EP 3 668 207 B1**
(45) Date of publication and mention of the grant of the patent: **29.01.2025**
(21) Application number: 17920929.1
(22) Date of filing: 15.08.2017
(51) Int. Cl.: H04W 68/12, H04W 8/22, H04W 36/14, H04W 48/18, H04W 68/02

(54) **RADIO BASE STATION AND RADIO COMMUNICATION METHOD**
FUNKBASISSTATION UND FUNKKOMMUNIKATIONSVERFAHREN
STATION DE BASE RADIO ET PROCÉDÉ DE COMMUNICATION RADIO

(30) Priority: 09.08.2017 JP 2017154773
(43) Date of publication of application: 17.06.2020
(73) Proprietor: NTT DOCOMO, INC., Chiyoda-ku Tokyo 100-6150 (JP)
(72) Inventor: MATSUKAWA, Ryusuke, Tokyo 100-6150 (JP); TANIGUCHI, Masato, Tokyo 100-6150 (JP); HAPSARI, Wuri Andarmawanti, Tokyo 100-6150 (JP); AOYAGI, Kenichiro, Tokyo 100-6150 (JP); ZAKI, Zahid, Tokyo 107-0052 (JP)
(74) Representative: Hoffmann Eitle
(86) International application number: PCT/JP2017/029416
(87) International publication number: WO 2019/030938

(56) References cited:
- WO-A1-2016/025899
- WO-A1-2016/025899
- WO-A1-2016/070418
- JP-A- 2017 507 584
- HUAWEI (RAPPORTEUR): "Introduction of NB-IoT", vol. RAN WG2, no. St Julian's, Malta; 20160215 - 20160219, 7 March 2016 (2016-03-07), XP051081859, Retrieved from the Internet <URL:http://www.3gpp.org/ftp/tsg_ran/WG2_RL2/TSGR2_93/Docs/> [retrieved on 20160307]
- "3rd Generation Partnership Project; Technical Specification Group Services and System Aspects; General Packet Radio Service (GPRS) enhancements for Evolved Universal Terrestrial Radio Access Network (E-UTRAN) access (Release 15)", 12 June 2017 (2017-06-12), XP051334830, Retrieved from the Internet <URL:http://www.3gpp.org/ftp/tsg_sa/WG2_Arch/Latest_SA2_Specs/DRAFT_INTERIM/Archive/> [retrieved on 20170612]
- HUAWEI: "Introduction of NB-IoT", 3GPP TSG-RAN WG2 #93 R2-162068, 7 March 2016 (2016-03-07), pages 1 - 288, XP051081859, Retrieved from the Internet <URL:http://www.3gpp.org/ftp/tsg_ran/WG2_RL2/TSGR2_93/Docs/R2-162068.zip> [retrieved on 20171020]

## Description

### TECHNICAL FIELD

The present invention relates to a radio base station and a radio communication method that are capable of controlling a user device that supports a coverage enhancement mode.

### BACKGROUND ART

3rd Generation Partnership Project (3GPP) specifies Long Term Evolution (LTE), and with the aim of further speeding, specifies LTE-Advanced (hereinbelow, the LTE includes the LTE-Advanced). Moreover, in the 3GPP, further, specification of a succeeding system of the LTE called 5G (5th generation mobile communication system) and the like is being considered.

In LTE Release-13 and later, categories for inexpensive terminals (user devices) such as Internet of Things (IoT) modules are stipulated. Specifically, specifications of categories M1 and M2 (hereinafter, Cat.M) are stipulated for bandwidth reduced low complexity UEs (BL UE).

Moreover, as a part of the specifications relating to such BL UEs, coverage enhancement (CE) mode that is aimed at achieving the same effect as that of cell coverage enhancement is stipulated. However, the coverage enhancement mode is not limited to the BL UEs and can support UEs of other categories (non-enhancement mode).

As the coverage enhancement mode, a plurality of modes (CE Mode A and CE Mode B) having different repetitive transmission count of Random Access Channel (RACH) preambles and the like is stipulated. Therefore, depending on whether the coverage enhancement mode is applied and which coverage enhancement mode is applied, the transmission channel and the repetition count of the paging, too, differ.

To address this issue, as a message of S1 application protocol (S1-AP) that is notified from a core network to the radio base station (eNB), UE Radio Capability for Paging is stipulated (see Non-Patent Document 1).

The UE Radio Capability for Paging includes an information element (IE) that indicates whether the UE supports the Cat.M and the coverage enhancement mode. When transmitting a paging message (specifically, SL-AP Paging) to the eNB, the core network configures the UE Radio Capability for Paging in the message. Based on the UE Radio Capability for Paging, the eNB can transmit appropriate paging to the UE.

The eNB acquires the UE Radio Capability for Paging from the UE via UE Capability Enquiry procedure, and notifies the same to the core network. The core network retains the UE Radio Capability for Paging. On the other hand, it is stipulated that the UE Radio Capability for Paging is not retained in the core network of 3G (Universal Mobile Telecommunications System (UMTS) ) (see Non-Patent Document 2).

In the 3GPP technical specification TS 23.401 V15.0.0 (2017-06) entitled "3rd Generation Partnership Project; Technical Specification Group Services and System Aspects; General Packet Radio Service (GPRS) enhancements for Evolved Universal Terrestrial Radio Access Network (E-UTRAN) access (Release 15)", the authors disclose Stage 2 service description for the Evolved 3GPP Packet Switched Domain. The Evolved 3GPP Packet Switched Domain provides IP connectivity using the Evolved Universal Terrestrial Radio Access Network (E-UTRAN). The specification covers both roaming and non-roaming scenarios and covers all aspects, including mobility between EUTRAN and pre-E-UTR_AN 3GPP radio access technologies, policy control and charging, and authentication, as well as paging enhancements. An Evolved Packet System architecture optimised for the support of Cellular loT (Internet of Things) applications is also defined in this document.

WO 2016/025899 A1 discloses a wireless transmit/receive unit (WTRU) that transmits a preamble using a physical random access channel (PRACH) and determines a location of a random access response (RAR) based on a parameter of the PRACH. The location may include a subframe and/or a frequency resource on which the RAR is transmitted. The RAR may be received at the location. A device may receive a preamble using a PRACH associated with a coverage enhancement (CE) level and/or a CE mode of a WTRU. The device may determine a location of an RAR based on a parameter of the PRACH. The location may include a subframe and/or a frequency resource on which the RAR is to be transmitted. The device may determine a number of repetitions of the RAR to transmit based on the CE level or CE mode. The RAR may be transmitted at the location with the determined number of repetitions.

In the change request R2-162068 the authors propose a number of changes to 3GPP technical specification TS 36.300 V13.2.0 in view of the introduction of NB-IoT, and disclose UE capability handling during inter-RAT handover.

### PRIOR ART DOCUMENT

### NON-PATENT DOCUMENT

Non Patent Document 1: 3GPP TS 36.413 V13.6.0 Subclause 9.2.1.98 UE Radio Capability for Paging, 3rd Generation Partnership Project; Technical Specification Group Radio Access Network; Evolved Universal Terrestrial Radio Access Network (E-UTRAN) ; S1 Application Protocol (S1AP) (Release 13), 3GPP, June 2017 Non Patent Document 2: 3GPP TS 23.401 V13.11.0 5.11.4 UE Radio Capability for Paging Information, 3rd Generation Partnership Project; Technical Specification Group Services and System Aspects; General Packet Radio Service (GPRS) enhancements for Evolved Universal Terrestrial Radio Access Network (E-UTRAN) access (Release 13), 3GPP, June 2017

### SUMMARY OE THE INVENTION

However, when the UE Radio Capability for Paging is not retained at the 3G (UMTS) side, the following issues arise. Specifically, when the UE has transited (handed over or performed cell reselection) from the 3G to the LTE, a core network of a transition-destination LTE does not retain the UE Radio Capability for Paging. In such a state, when paging transmission is triggered, the UE Radio Capability for Paging is not configured in SL-AP Paging, and the eNB that has received SL-AP Paging knows that the UE does not support Cat.M and does not support the coverage enhancement mode.

Therefore, when the transited UE is BL UE and supports the coverage enhancement mode, it is assumed that the eNB executes paging for a normal UE that is not BL UE, and the BL UE cannot correctly receive such a paging.

The present invention has been made in view of the above circumstances. One object of the present invention is to provide, even when BL UE transitions from the 3G (UMTS) to the LTE, a radio base station and a radio communication method capable of executing appropriate paging with the BL UE.

The present invention provides a radio base station, in accordance with claim 1.

The present invention also provides a radio communication method, in accordance with claim 4.

### BRIEF DESCRIPTION OF DRAWINGS

FIG. 1 is an overall structural diagram of a radio communication system 10.
FIG. 2 is a functional block diagram of eNB 100B.
FIG. 3 is a functional block diagram of MME 300.
FIG. 4 is a diagram showing a paging sequence that is performed with UE 50 (Operation Example 1).
FIG. 5 is a diagram showing the paging sequence that is performed with the UE 50 (Operation Example 2).
FIG. 6 is a diagram showing a paging initiation sequence that is performed with the UE 50 (Operation Example 3 : Inter-RAT HO).
FIG. 7 is a diagram showing the paging initiation sequence that is performed with the UE 50 (Operation Example 3: Cell Reselection (Active Flag - Present)).
FIG. 8 is a diagram showing the paging initiation sequence that is performed with the UE 50 (Operation Example 3: Cell Reselection (Active Flag - Absent)).
FIG. 9 is a diagram showing a paging initiation sequence that is performed with the UE 50 that corresponds to a first idle-mode TAU after RAT change (Operation Example 4.1).
FIG. 10 is a diagram showing the paging initiation sequence that is performed with the UE 50 that corresponds to the first idle-mode TAU after RAT change (Operation Example 4.2).
FIG. 11 is a diagram showing the paging initiation sequence that is performed with the UE 50 that corresponds to the first idle-mode TAU after RAT change (Operation Example 4.3) .
FIG. 12A is a diagram showing a relation between capability information of the UE 50 that can be assumed at the eNB 100B side and paging (Operation Example 1).
FIG. 12B is a diagram showing a relation between the capability information of the UE 50 that can be assumed at the eNB 100B side and the paging (Operation Example 2).
FIG. 13 is a diagram showing an example of a hardware configuration of the eNB 100B and the MME 300.

### MODES FOR CARRYING OUT THE INVENTION

Exemplary embodiments are explained below with reference to the accompanying drawings. In the drawings, structural elements having the same or similar functions or same or similar configuration are indicated by the same or similar reference numerals and the explanation thereof is appropriately omitted.

### (1) Overall Structural Configuration of Radio Communication System

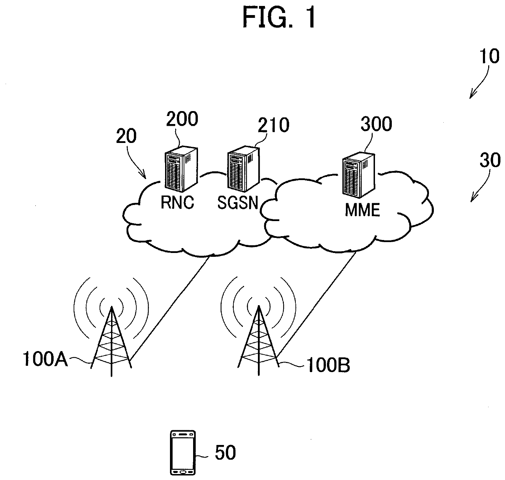

FIG. 1 is an overall structural diagram of a radio communication system 10 according to the present embodiment. The radio communication system 10 is a radio communication system in accordance with 3G (UMTS) and LTE specifications. The radio communication system 10 includes 3G system 20 (a first radio communication system) and LTE system 30 (a second radio communication system). A user device (user equipment) 50 (hereinafter, "UE 50") is connected to the 3G system 20 and the LTE system 30, and executes radio communication.

The 3G system 20 includes a radio base station 100A (hereinafter, "BTS 100A"), a radio network controller (hereinafter, "RNC 200"), and a packet access control node, specifically, Serving GPRS Support Node (hereinafter, "SGSN 210"). The RNC 200 and the SGSN 210 are network devices that constitute a core network of the 3G system 20.

The RNC 200 performs various controls of the UE 50 and the BTS 100A. The SGSN 210 forwards packet data (user data) that is transmitted from / received by the UE 50.

The LTE system 30 includes a radio base station 100B (hereinafter, "eNB 100B") and a mobility management entity (hereinafter, "MME 300") . In other words, the eNB 100B and the MME 300 constitute the LTE system 30. The MME 300 accommodates the eNB 100B, and performs mobility control and bearer control and the like relating to the UE 50. The MME 300 is a network device that constitutes a core network of the LTE system 30.

The UE 50 executes radio communication with the BTS 100A in accordance with the specification of the 3G. The UE 50 executes radio communication with the eNB 100B in accordance with the specification of the LTE. In other words, the UE 50 is capable of transitioning from the 3G to the LTE and from the LTE to the 3G.

Specifically, the UE 50 is capable of executing Inter-RAT (Radio Access Technology) handover (hereinafter, "Inter-RAT HO") that is executed between the 3G and the LTE, and Cell Reselection that is executed between the 3G and the LTE.

Moreover, the type of the UE 50 is not limited to any particular UE type, and the UE 50 can be a bandwidth reduced low complexity UE (BL UE). Furthermore, the UE 50 can support a coverage enhancement mode (CE mode). Specifically, the UE 50 is capable of supporting CE Mode A and CE Mode B (see 3GPP TS 36.213 and the like).

The CE mode is a technology by which a cell coverage is equivalently enhanced by gradually lowering the threshold of the received power level (RSRP/RSRQ), and in which, a number of attempts of the random access procedure (RA procedure) according to the respective mode is also stipulated.

The UE 50 can notify the 3G system 20 and the LTE system 30 of capability information that indicates various capabilities (UE category, Carrier Aggregation / Dual Connectivity (CA / DC) band combination, MIMO layer, and the like) of the UE 50. The capability information also includes information that indicates whether the UE 50 supports the CE Mode.

Specifically, the UE 50 notifies the 3G system 20 and the LTE system 30 of UE Capability that indicates the capability supported by the UE 50.

However, the capability information that indicates that the UE 50 supports the CE Mode is not retained in the 3G system 20 (see Chapter 5.11.4 of TS 23.401 V13.11.0 (Non-Patent Document 2)). On the other hand, the capability information that indicates that the UE 50 supports the CE Mode is retained in the LTE system 30.

### (2) Functional Block Configuration of Radio Communication System

A functional block configuration of the radio communication system 10 is explained below. Specifically, functional block configurations of the eNB 100B and the MME 300 are explained below.

### (2.1) eNB 100B

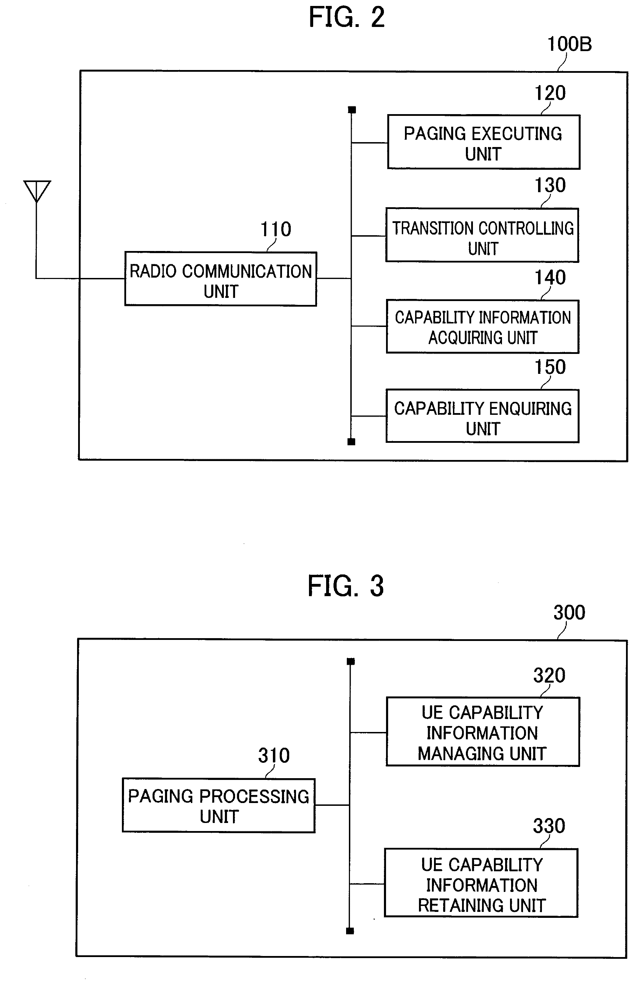

FIG. 2 is a functional block diagram of the eNB 100B. As shown in FIG. 2, the eNB 100B includes a radio communication unit 110, a paging executing unit 120, a transition controlling unit 130, a capability information acquiring unit 140, and a capability enquiring unit 150.

The radio communication unit 110 executes radio communication in accordance with the LTE system. Specifically, the radio communication unit 110 transmits to / receives from the UE 50 radio signals in accordance with the LTE system. The user data or control data is multiplexed in the radio signal. Moreover, the control data is transmitted / received via a radio resource control layer (RRC layer) message.

The paging executing unit 120 executes paging with the UE 50. Specifically, the paging executing unit 120 receives a paging message (SL-AP Paging) that is transmitted from the MME 300, and transmits to the UE 50 the paging message according to the received paging message.

Particularly, in the present embodiment, when the transition controlling unit 130 transitions the UE 50 to the LTE system 30, the paging executing unit 120 executes various different paging corresponding to the type (UE category) of the UE 50.

Specifically, the paging executing unit 120 can execute the paging corresponding to the CE Mode and the paging corresponding to a non-enhancement mode other than the CE Mode (RRC Paging) . In other words, when the UE 50 transitions from the 3G system 20 to the LTE system 30, the paging executing unit 120 executes the paging corresponding to the CE Mode and the paging corresponding to the non-enhancement mode at the same time.

The non-enhancement mode denotes a user device that does not support the CE Mode, specifically, denotes a user device that is other than BL UE (Cat.M) and that does not support the CE Mode (called Normal Mode UE).

Moreover, when the UE Capability that includes an information element (IE) that indicates that the UE 50 is the non-enhancement mode is acquired by the capability information acquiring unit 140, the paging executing unit 120 can also execute the paging corresponding to the non-enhancement mode.

Specifically, when the following information elements are included in UE Radio Capability for Paging that is received from the MME 300, the paging executing unit 120 executes the paging corresponding to the non-enhancement mode.

* ue-CategoryDL-v1310: Option OFF
*ce-ModeA-r13, ce-ModeB-r13: Option OFF
Such information elements explicitly indicate that the UE is not BL UE (Cat.M) (ue-CategoryDL-v1310 option is OFF), and does not support the CE Mode (ce-ModeA-r13, ce-ModeB-r13 option is OFF).

Moreover, based on the UE Capability of the UE 50 acquired by the capability enquiring unit 150, the paging executing unit 120 can also execute the paging corresponding to the CE Mode or the paging corresponding to a non-enhancement mode other than the CE Mode.

Specifically, when it is indicated by the UE Capability that the UE 50 supports the CE Mode, the paging executing unit 120 executes the paging corresponding to the CE Mode. On the other hand, when the UE Capability indicates that the UE 50 does not support the CE Mode, the paging executing unit 120 executes the paging corresponding to the non-enhancement mode (Normal Mode UE).

Furthermore, the paging executing unit 120 can execute the paging corresponding to the CE Mode or the paging corresponding to Normal Mode UE, and can execute the other paging, if the one executed first fails.

Moreover, in such a case, the paging executing unit 120 can first execute the paging that corresponds to the non-enhancement mode.

The transition controlling unit 130 controls the transition of the UE 50 from the 3G system 20 to the LTE system 30. Specifically, the transition controlling unit 130 executes Inter-RAT HO and Cell Reselection between the 3G and the LTE. Inter-RAT HO is a procedure via which the UE 50 in the Active (RRC_CONNECTED) state is transited, and Cell Reselection is a procedure via which the UE 50 in the Idle state is transited.

The capability information acquiring unit 140 acquires the capability information of the UE 50. Specifically, the capability information acquiring unit 140 acquires from the MME 300 the UE Capability that includes the information element (ue-CategoryDL-v1310 and ce-ModeA-r13, ce-ModeB-r13) that shows that the UE 50 supports the non-enhancement mode (Normal Mode UE).

Moreover, when the information element relating to the UE Radio Capability for Paging, that is, when the UE Capability that includes information whether the UE 50 supports the CE Mode is not notified via the UE Capability Information transmitted by the UE 50, the capability information acquiring unit 140 can generate the UE Radio Capability for Paging in which the information element (ue-CategoryDL-v1310 and ce-ModeA-r13, ce-ModeB-r13) option is set to OFF.

The capability enquiring unit 150 enquires about the capability information of the UE 50. Specifically, when the transition controlling unit 130 transitions the UE 50 to the LTE system 30, the capability enquiring unit 150 transmits to the UE 50 the UE Capability Enquiry (capability enquiry) via which the UE Capability of the UE 50 is enquired.

Moreover, the capability enquiring unit 150 acquires from the UE 50 the UE Capability that includes whether the UE 50 supports the CE Mode. Specifically, the capability enquiring unit 150 acquires the UE Capability Information transmitted by the UE 50.

Furthermore, the capability enquiring unit 150 transmits to the SGSN 210 and / or the MME 300 the UE Capability acquired from the UE 50. However, when the information element relating to the UE Radio Capability for Paging is not notified, the UE Radio Capability for Paging in which the information element (ue-CategoryDL-v1310 and ce-ModeA-r13, ce-ModeB-r13) option is set to OFF the information element (ue-CategoryDL-v1310 and ce-ModeA-r13, ce-ModeB-r13) option is set to OFF can be included in the UE Capability transmitted by the capability enquiring unit 150.

### (2.2) MME 300

FIG. 3 is a functional block diagram of the MME 300. As shown in FIG. 3, the MME 300 includes a paging processing unit 310, a UE capability information managing unit 320, and UE capability information retaining unit 330.

The paging processing unit 310 executes processing relating to paging that is executed with the UE 50. Specifically, the paging processing unit 310 transmits to the eNB 100B a paging message for the UE 50 at a predetermined timing depending on the presence or absence of the downlink data for the UE 50.

Moreover, the paging processing unit 310 transmits to the eNB 100B the UE Radio Capability for Paging that includes the capability information of the UE 50. As explained above, the UE Radio Capability for Paging includes the information elements of ue-CategoryDL-v1310 and ce-ModeA-r13, ce-ModeB-r13.

The UE capability information managing unit 320 manages the capability information of the UE 50. Specifically, the UE capability information managing unit 320 acquires the UE Capability included in the UE Capability Information that is transmitted from the UE 50, and the UE capability information retaining unit 330 retains the UE Capability Information.

The UE capability information managing unit 320 can acquire the capability information of the UE 50 acquired from another network device (such as home subscriber server (HSS)) and the UE capability information retaining unit 330 can retain the capability information of the UE 50.

The UE capability information retaining unit 330 retains the UE Capability Information by mapping the capability information of a plurality of the UEs that includes the UE 50 with the corresponding UEs.

### (3) Operation of Radio Communication System

Operation of the radio communication system 10 is explained below. Specifically, a paging operation that is executed in accordance with the capability of the UE 50 will be explained. Specifically, Operation Examples 1 to 4 of the paging executed with the UE 50 will be explained.

In the following explanation, it is assumed that a plurality of patterns of the UE 50 capability can exist depending on whether it is BL UE (Cat.M and the like) and whether the CE Mode is supported, and that the capability of the UE 50 is not known at the network side (radio base station and network device) when the UE 50 transitions from the 3G system 20 to the LTE system 30. In other words, as explained above, because the UE Radio Capability for Paging is not used at the 3G (UMTS) side, the LTE system 30 (eNB 100B) cannot know the capability of the UE 50.

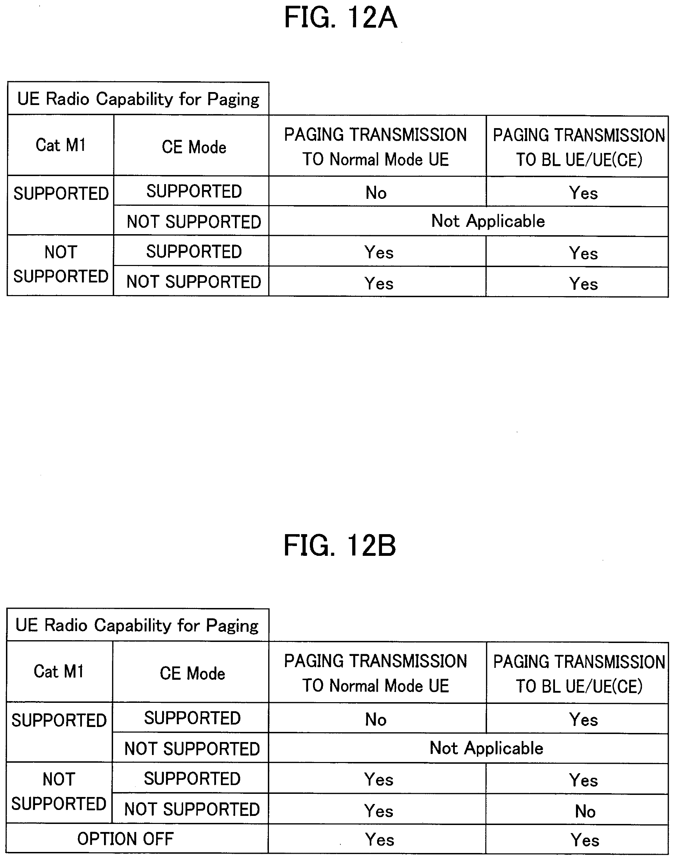

FIG. 12A shows a relation between the capability information of the UE 50 that can be assumed at the eNB 100B side and the paging (corresponding to Operation Example 1 explained later), and FIG. 12B shows the relation between the capability information of the UE 50 that can be assumed at the eNB 100B side and the paging (corresponding to Operation Example 2 explained later).

As shown in FIGS. 12A and 12B, the UE Radio Capability for Paging includes combinations depending on whether Cat.M (here, Cat M1 is given as an example) and the CE Mode are supported.

A case of "Cat.M: Not supported, CE Mode: Not supported" corresponds to a case in which the UE Radio Capability for Paging is not notified from the MME 300. Moreover, in such a case, instead of determining whether the CE Modes A and B are supported, a case in which the paging method (cycle and channel and the like) is determined depending on whether the UE 50 supports the the CE mode is assumed. Alternatively, the number of repetitions of the paging can be optimized by determining whether the CE Modes A and B are supported.

For example, when the UE 50 supports the Cat.M and the CE Mode, the UE 50 supports BL UE or the CE Mode (denoted as UE (CE)). Therefore, it is necessary to execute paging for BL UE / UE (CE) . On the other hand, in such a case, paging for Normal Mode UE (that is, for no CE Mode support) is not necessary.

Moreover, according to the 3GPP specifications, a case of "Cat.M: Supported, CE Mode: Not supported" cannot exist. On the other hand, when Cat.M is not supported, it is preferable that the paging for BL UE / UE (CE) and the paging for Normal Mode UE is executed, regardless of whether the CE Mode is supported.

In the case of "Cat.M: Not supported, CE Mode: Not supported", it is acceptable if only the paging for Normal Mode UE is executed, however, because the UE 50 capability in not known if the information based on the UE Radio Capability for Paging cannot be used, the paging for BL UE / UE (CE) is also executed (see Operation Example 1).

In other words, when the eNB 100B cannot use the UE Radio Capability for Paging, which is the capability information of the UE 50, there is a problem that the eNB 100B erroneously recognizes that the UE 50 does not support the CE Mode and executes the paging for Normal Mode UE. However, in Operation Examples 1 to 3, an example in which appropriate paging is executed even in such a case will be explained.

### (3.1) Operation Example 1

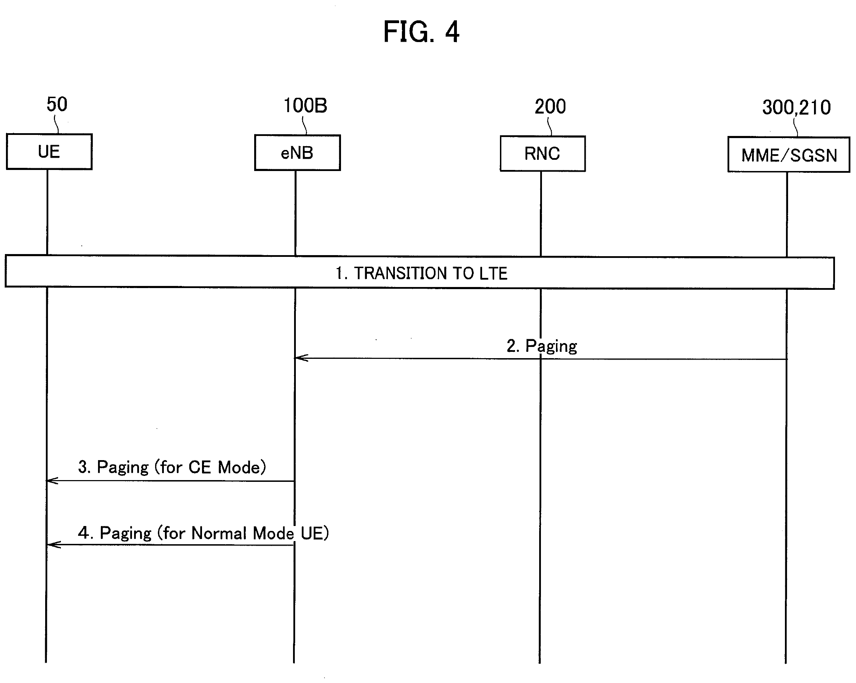

FIG. 4 shows a paging sequence that is performed with the UE 50 (Operation Example 1). In the present operation example, the paging for BL UE / UE (CE) and the paging for Normal Mode UE (that is, for no CE Mode support) are executed, regardless of the capability of the UE 50.

As shown in FIG. 4, the UE 50 transitions from the 3G system 20 to the LTE system 30 (performs Inter-RAT HO or Cell Reselection) (Step 1).

Next, a downlink communication that is addressed to the UE 50 occurs, and the MME 300 transmits a paging message to the eNB 100B (Step 2).

Upon receiving the paging message, the eNB 100B executes the paging for BL UE / UE (CE) and the paging for Normal Mode UE (Steps 3 and 4).

### (3.2) Operation Example 2

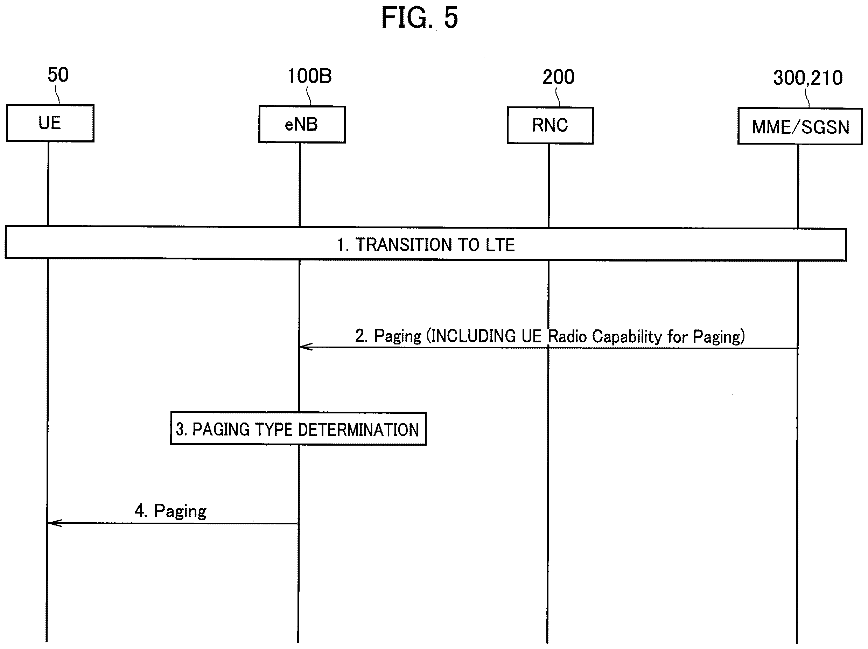

FIG. 5 shows the paging sequence that is performed with the UE 50 (Operation Example 2). In the present operation example, by adding a notification of the capability information relating to Normal Mode UE, it can be distinguished that whether the UE 50 does not support the CE Mode because the UE 50 is Normal Mode UE, or whether it is unclear that the CE Mode is supported because the UE 50 has transited from the 3G system 20 that does not use the UE Radio Capability for Paging.

A part of operations that differs from those performed in Operation Example 1 will be explained below. When the MME 300 transmits the paging message to the eNB 100B (Step 3), at this step, the MME 300 transmits the UE Radio Capability for Paging of the UE 50. As explained above, the UE Radio Capability for Paging transmitted by the MME 300 includes the information elements of ue-CategoryDL-v1310 and ce-ModeA-r13, ce-ModeB-r13.

Moreover, at this step, the information elements ue-CategoryDL-v1310 and ce-ModeA-r13, ce-ModeB-r13 are all set to Option OFF. Accordingly, it is explicitly indicated that the UE 50 is not BL UE, does not support the CE Mode, and is Normal Mode UE.

Based on the UE Radio Capability for Paging, the eNB 100B determines the paging type to be executed with the UE 50 (Step 4). Specifically, the eNB 100B determines that the paging for Normal Mode UE is to be executed, and executes the paging for Normal Mode UE (Step 5).

### (3.3) Operation Example 3

In the present operation example, the capability information is acquired from the UE 50 when the UE 50 transitions from the 3G system 20 to the LTE system 30. Paging sequences that are to be performed in accordance with a transition method or a difference in the state of the UE 50 will be explained below.

### (3.3.1) In the case of Inter-RAT HO

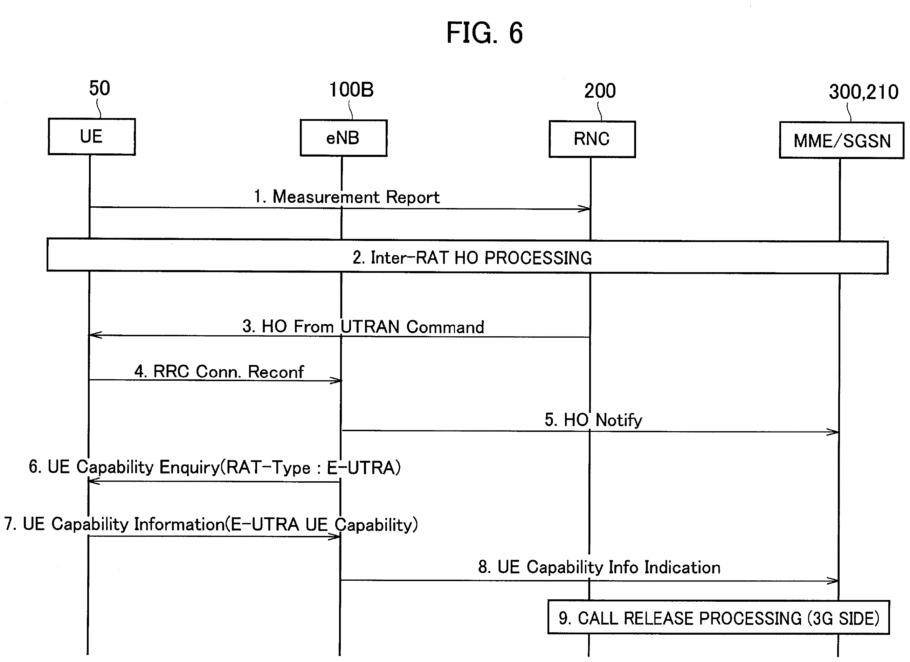

FIG. 6 shows the paging initiation sequence that is performed with the UE 50 (Operation Example 3: Inter-RAT HO) . A part of operations that differs from those performed in Operation Example 1 will be explained below. The RNC 200 transmits HO From UTRAN Command associated with the Inter-RAT HO processing to the UE 50 (Step 3).

The UE 50 transmits RRC Connection Reconfiguration to the eNB 100B according to the received HO From UTRAN Command (Step 4).

The eNB 100B transmits HO Notify to the MME 300 according to the received RRC Connection Reconfiguration (Step 5). Moreover, the eNB 100B transmits to the UE 50 the UE Capability Enquiry (Step 6).

The UE 50 returns the UE Capability Information that includes the UE Capability of the UE 50 to the eNB 100B according to the received UE Capability Enquiry (Step 7) . The information element that indicates that the UE 50 supports the CE Mode is included in the UE Capability (E-UTRA UE Capability).

Based on the received UE Capability Information, the eNB 100B transmits to the MME 300 the UE Capability Info Indication that includes the UE Capability of the UE 50 (Step 8) . Next, a call release processing relating to the UE 50 is executed at the 3G side (RNC 200, SGSN 210) (Step 9).

After the processes up to Step 9 are completed, because the UE capability of the UE 50 has already been acquired when the paging is executed with the UE 50, the UE Radio Capability for Paging can be used. In other words, appropriate paging can be executed with the UE 50.

### (3.3.2) When Cell Reselection (Active Flag - Present)

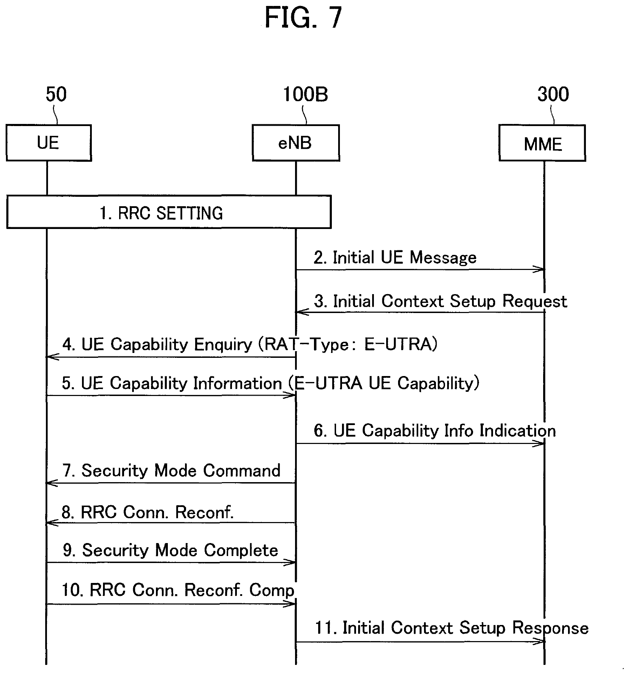

FIG. 7 shows the paging initiation sequence that is performed with the UE 50 (Operation Example 3: Cell Reselection (Active Flag - Absent)).

As shown in FIG. 7, the UE 50 performs with the eNB 100B the settings in the radio resource control layer (RRC layer) that are associated with the execution of Cell Reselection from the 3G system 20 to the LTE system 30 (Step 1). Moreover, the eNB 100B transmits to / receives from the MME 300 an initial message associated with the Cell Reselection of the UE 50 (Steps 2 and 3) .

Such a sequence is performed in accordance with TAU (Tracking Area Update) that is initiated from the UE 50 at the time of Cell Reselection.

Once the transmission / reception of the initial message is completed, the eNB 100B promptly transmits the UE Capability Enquiry to the UE 50 (Step 4). At this step, because the Active Flag is present (True) in the TAU, the UE Capability of the UE 50 is instantaneously acquired and used to execute the paging with the UE 50.

The UE 50 returns the UE Capability Information that includes the UE Capability of the UE 50 to the eNB 100B according to the received UE Capability Enquiry (Step 5).

Based on the received UE Capability Information, the eNB 100B transmits to the MME 300 the UE Capability Info Indication that includes UE Capability of the UE 50 (Step 6).

The eNB 100B further transmits to / receives from the UE 50 a message relating to security and establishes settings in the RRC layer (Steps 7 to 11).

After the processes up to Step 11 are completed, because the UE capability of the UE 50 has already been acquired when the paging is executed with the UE 50, the UE Radio Capability for Paging can be used. In other words, appropriate paging can be executed with the UE 50.

### (3.3.3) When Cell Reselection (Active Flag - Absent)

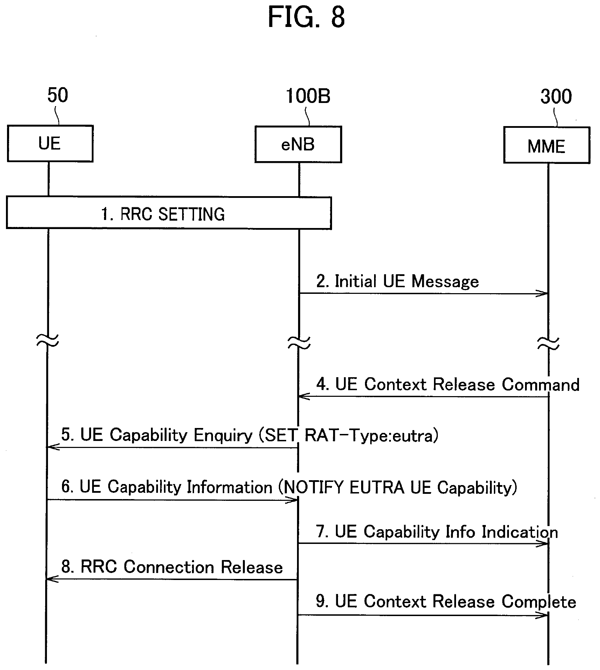

FIG. 8 shows the paging initiation sequence that is performed with the UE 50 (Operation Example 3: Cell Reselection (Active Flag - Absent)). A part of the sequence that differs from that performed in the case of Cell Reselection (Active Flag - Present) shown in FIG. 7 will be mainly explained below.

As shown in FIG. 8, when the Active Flag is absent, the MME 300 transmits UE Context Release Command to the eNB 100B (Step 4). In other words, the MME 300 completes the TAU process in the Non-Access Stratum (NAS) and instructs call release relating to the UE 50. Moreover, compared to FIG. 7, in the case of the sequence shown in FIG. 8 (Cell Reselection (Active Flag - Absent)), Initial Context Setup Request is not transmitted.

According to the received UE Context Release Command, the eNB 100B transmits the UE Capability Enquiry to the UE 50, and acquires the UE Capability Information (Steps 5 and 6). The eNB 100B transmits the UE Capability Info Indication to the MME 300 (Step 7).

Then, the eNB 100B releases the connection of the RRC layer with the UE 50, and notifies the MME 300 that the context of the UE 50 is released (Steps 8 and 9).

After the processes up to Step 9 are completed, because the UE capability of the UE 50 has already been acquired when the paging is executed with the UE 50, the UE Radio Capability for Paging can be used. In other words, appropriate paging can be executed with the UE 50.

### (3.3.4) Modifications

In Operation Example 1 (and Operation Example 2) explained above, there is a problem that the radio resources are excessively used to execute the paging for BL UE / UE (CE) and the paging for Normal Mode UE. To solve the problem, the configuration can be modified as explained below.

Specifically, when the eNB 100B transmits a first paging message (RRC Paging), the paging message (that is, the paging for BL UE / UE (CE) or the paging for Normal Mode UE) is transmitted by only using one channel. If the eNB 100B is not able to confirm the response for the paging message, the eNB 100B transmits the paging message by using the other channel (or, re-transmits the paging message by using both the channels).

For example, the eNB 100B sets a timer to wait for a response from the UE 50 for the paging message, and till the timer expires, waits for the RRC Connection Establishment procedure to be started by the UE 50 (retains UE 50-related ID such as S-TMSI).

Furthermore, during the initial period in which at least the IoT-related services are deployed, it is assumed that a number of Cat.M-supporting terminals and the the CE Mode-supporting terminals is extremely low compared to a number of Normal Mode UE (Legacy UE). Therefore, in the present modification, if the paging message for the existing Normal Mode UE is transmitted in the first paging, the probabilistic possibility that the UE 50 can successfully receive the paging message becomes high. Accordingly, wastage of radio resources can be reduced.

Moreover, in Operation Example 3 explained above, in the case of Cell Reselection (Active Flag - Absent) (see FIG. 8), the MME 300 transmits the UE Context Release Command to the eNB 100B. However, instead of transmitting the UE Context Release Command in this manner, an operation that is the same as that executed in the case of Cell Reselection (Active Flag-Present) (see FIG. 7) can be executed.

In other words, even when the Active Flag is absent, after the transmission / reception of the initial message (Initial UE Message and Initial Contest Setup Request) is completed, the eNB 100B can promptly transmit to the UE 50 the UE Capability Enquiry and acquire the UE Capability of the UE 50.

### (3.4) Operation Example 4

In the present operation example, an operation example in which the MME 300 acquires the UE Capability Enquiry in the first Tracking Area Update (called "first idle-mode TAU after RAT change") performed from the UE 50 that is in the Idle state after the UE 50 has transited from the 3G system 20 to the LTE system 30, that is, after RAT (Radio Access Technology) is changed is explained.

Moreover, even in the present operation example, the UE 50 can be BL UE that supports Cat.M and the like.

### (3.4.1) Operation Example 4.1

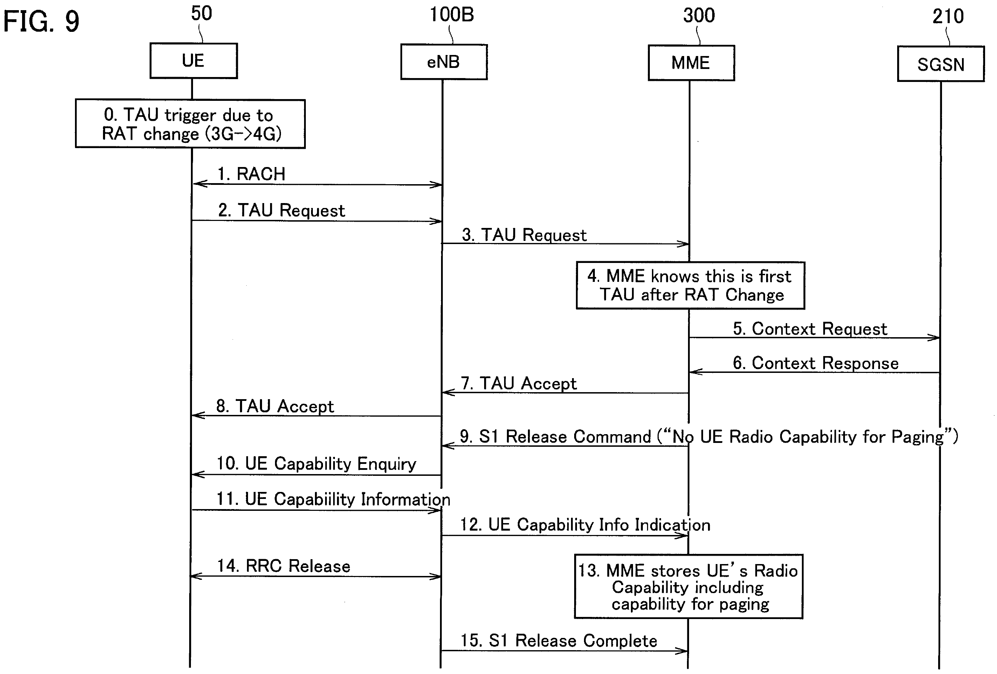

In FIG. 9, the paging initiation sequence that is performed with the UE 50 that corresponds to the first idle-mode TAU after RAT change (Operation Example 4.1) is shown.

As shown in FIG. 9, following the transition from the 3G system 20 to the LTE system 30 (RAT change), the UE 50 initiates the Tracking Area Update (TAU) procedure (Step 0). As a result, the UE 50 and the eNB 100B execute the random access (RA) procedure by using Random Access Channel (RACH) (Step 1) .

Once the RA procedure is completed, the UE 50 transmits TAU Request to the eNB 100B (Step 2). The eNB 100B transmits to the MME 300 the TAU Request based on the received TAU Request from the UE 50 (Step 3).

Based on the received TAU Request, the MME 300 known that the received TAU Request is a first TAU after the transition of the UE 50 to the LTE system 30 (Step 4). Specifically, the MME 300 knows that the received TAU Request is a first TAU based on 4G-GUTI (Global Unique Temporary ID) provided from the UE 50.

Next, the MME 300 transmits Context Request to the SGSN 210 (Step 5). The SGSN 210 returns Context Response as a response to the Context Request (Step 6).

Upon receiving the Context Response, the MME 300 returns TAU Accept to the eNB 100B as a response to the TAU Request (Step 7). Based on the TAU Accept received from the MME 300, the eNB 100B transmits the TAU Accept to the UE 50 (Step 8) .

After transmitting the TAU Accept, the MME 300 transmits S1 Release Command to the eNB 100B (Step 9). The S1 Release Command includes information that indicates that the UE 50 does not possess the UE Radio Capability for Paging (No UE Radio Capability for Paging) . Accordingly, the eNB 100B can be requested to acquire the UE Capability of the UE 50.

Based on the information on the No UE Radio Capability for Paging included in the received S1 Release Command, the eNB 100B transmits the UE Capability Enquiry to the UE 50 (Step 10).

The UE 50 returns the UE Capability Information that includes the UE Capability of the UE 50 to the eNB 100B according to the received UE Capability Enquiry, (Step 11).

Based on the received UE Capability Information, the eNB 100B transmits to the MME 300 the UE Capability Info Indication that includes UE Capability of the UE 50 (Step 12) .

The MME 300 retains the UE Capability (including the UE Radio Capability for Paging) of the UE 50 included in the received UE Capability Info Indication (Step 13).

Subsequently, the eNB 100B releases the connection of the RRC layer with the UE 50 (Step 14), and transmits S1 Release Complete to the MME 300 (Step 15).

Furthermore, as explained above, the MME 300 performs the operation in accordance with the present operation example (transmission of S1 Release Command (Release instruction in S1 interface that includes the No UE Radio Capability for Paging) only in the case of the first idle-mode TAU after RAT change. In the subsequent TAU, because the eNB 100B and the MME 300 are already aware of the contents of the UE Radio Capability for Paging of the UE 50, such operation is not necessary.

According to the present operation example, the UE Radio Capability for Paging of the UE 50 can be acquired without adding a new message that is to be transmitted from the MME 300.

### (3.4.2) Operation Example 4.2

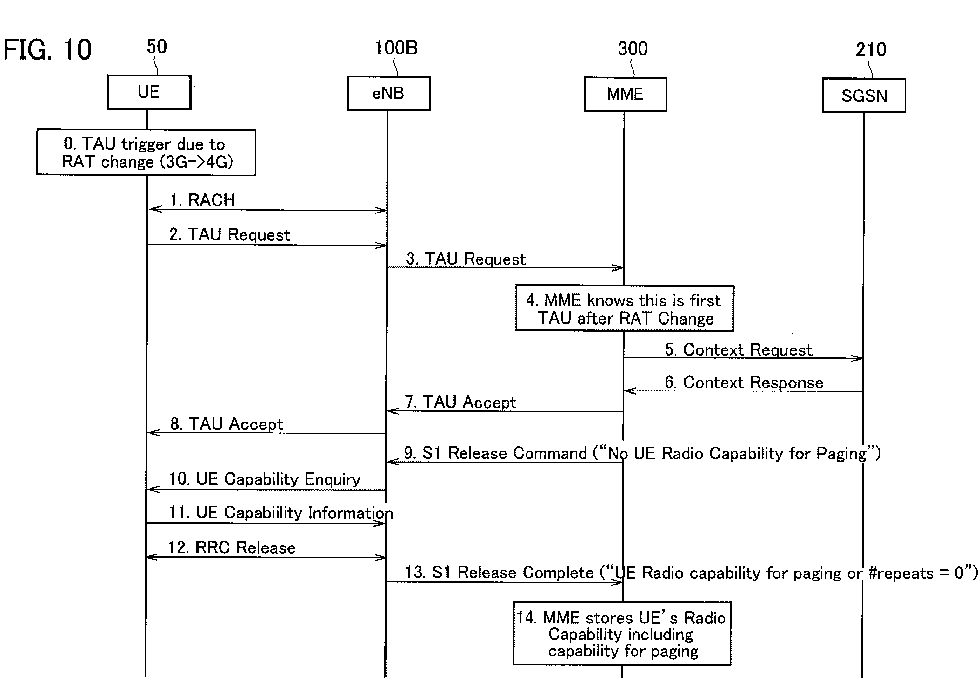

In FIG. 10, a paging initiation sequence that is performed with the UE 50 that corresponds to the first idle-mode TAU after RAT change (Operation Example 4.2) is shown. In the present operation example, the operation is similar to that executed in Operation Example 4.1. However, instead of the UE Capability Info Indication, the MME 300 acquires the UE Radio Capability for Paging of the UE 50 by receiving the S1 Release Complete that includes the UE Capability (completion response for the release instruction in the S1 interface). A part of processes that differs from those performed in Operation Example 4.1 will be mainly explained in the following explanation.

As shown in FIG. 10, processes performed at Steps 0 to 11 are the same as those performed at Steps 1 to 11 in Operation Example 4.1. Instead of transmitting the UE Capability Info Indication as explained in Operation Example 4.1, the eNB 100B releases the connection of the RRC layer with the UE 50 (Step 12), and transmits S1 Release Complete to the MME 300 (Step 13). The S1 Release Complete includes the UE Capability (including the UE Radio Capability for Paging) of the UE 50.

According to the present operation example, similar to Operation Example 4.1, the UE Radio Capability for Paging of the UE 50 can be acquired without adding a new message that is to be transmitted from the MME 300.

### (3.4.3) Operation Example 4.3

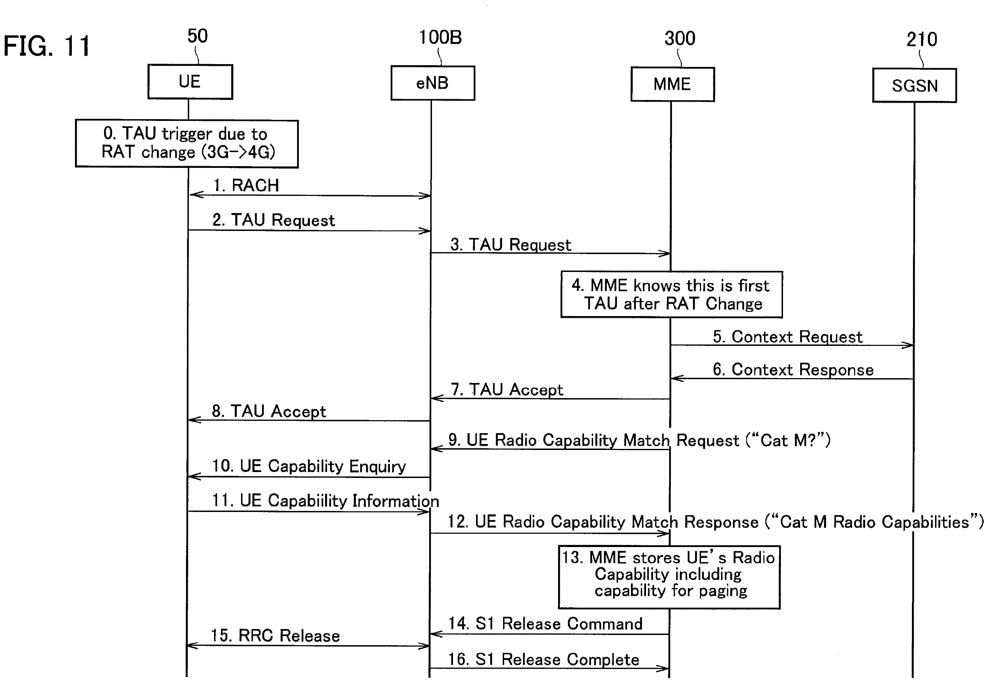

In FIG. 11, a paging initiation sequence that is performed with the UE 50 that corresponds to first idle-mode TAU after RAT change (Operation Example 4.3) is shown. In the present operation example, a message via which a type of the UE 50 is enquired is transmitted from the MME 300 to the eNB 100B. The eNB 100B acquires the UE Capability of the UE 50 according to the received message. A part of processes that differs from those performed in Operation Example 4.1 will be mainly explained in the following explanation.

As shown in FIG. 11, processes performed at Steps 0 to 8 are the same as those performed at Steps 0 to 8 in Operation Example 4.1. After transmitting the TAU Accept, the MME 300 transmits the UE Radio Capability Match Request (UE type request) to the eNB 100B (Step 9) . The UE Radio Capability Match Request includes information that enquires about the type of the UE 50 (UE category) (Cat. M?). However, at this step, even if Cat.M is assumed as the UE category, the UE category can be BL UE or CE Mode-supporting UE. Accordingly, the eNB 100B can be requested to acquire the UE Capability of the UE 50.

Based on the information on Cat. M? included in the received UE Radio Capability Match Request, the eNB 100B transmits the UE Capability Enquiry to the UE 50 (Step 10). Specifically, when the UE 50 is Cat.M, the eNB 100B transmits the UE Capability Enquiry.

However, upon transmitting to the UE 50 an enquiry about the type of the UE 50 and receiving a response that indicates that the UE 50 is Cat.M, the eNB 100B can transmit to the MME 300 the information that indicates that the UE 50 is Cat.M.

The UE 50 returns the UE Capability Information that includes the UE Capability of the UE 50 to the eNB 100B according to the received UE Capability Enquiry, (Step 11).

Based on the received UE Capability Information, the eNB 100B transmits to the MME 300 the UE Radio Capability Match Response (UE type response) that includes the UE Capability of the UE 50 (Cat.M) (Step 12). However, if the UE 50 is not Cat.M, the eNB 100B can transmit the UE Radio Capability Match Response that includes information that indicates that the UE 50 is not Cat.M, or can transmit a different message that includes the information that indicates that the UE 50 is not Cat.M to the MME 300.

Alternatively, the eNB 100B can transmit the UE Capability Enquiry only when the UE 50 is Cat.M (or BL UE).

The MME 300 retains the UE Capability (including the UE Radio Capability for Paging) of the UE 50 that is included in the received UE Radio Capability Match Response (Step 13) .

After receiving the UE Radio Capability Match Response, the MME 300 transmits the S1 Release Command to the eNB 100B (Step 14).

Subsequently, the eNB 100B releases the connection of the RRC layer with the UE 50 (Step 15), and transmits S1 Release Complete to the MME 300 (Step 16).

The UE Radio Capability Match Request explained in the present operation example is a changed form of UE Radio Capability Match procedure that is applied to UE that executes SRVCC (Single Radio Voice Call Continuity).

According to the present operation example, similar to Operation Example 4.1, the UE Radio Capability for Paging of the UE 50 can be acquired without adding a new message that is to be transmitted from the MME 300.

### (4) Effects and Advantages

The following operational effects can be obtained with the embodiments explained above. Specifically, according to the radio communication system 10, when the UE 50 transitions from the 3G system 20 to the LTE system 30, the paging for BL UE / UE (CE) and the paging for Normal Mode UE (that is, for no CE Mode support) is executed with the UE 50 (see Operation Example 1).

Therefore, even when the UE Radio Capability for Paging of the UE 50 is not used in the 3G system 20 and the UE Capability (particularly, CE mode support) of the UE 50 is not known when the UE 50 transitions to the LTE system 30, appropriate paging can be executed with the UE 50.

Certainly, according to the present invention, the UE 50 not correctly receiving either of the paging for BL UE / UE(CE) and the paging for Normal Mode UE results in wastage of the radio resources to a certain extent, however, a situation in which the paging cannot be received correctly at all by the UE 50 can be reliably avoided.

Moreover, according to the radio communication system 10, when the UE 50 is Normal Mode UE that does not support the CE Mode, the eNB 100B can acquire from the MME 300 the UE Capability of the UE 50 that includes the information element that indicates that the UE 50 is non-enhancement mode (in other words, Normal Mode UE) that does not support the CE Mode (see Operation Example 2).

By adding the notification of the capability information concerning Normal Mode UE, even when the UE 50 transitions from the 3G system 20 which does not use the UE Radio Capability for Paging to the LTE system 30, appropriate paging can be executed with the UE 50.

Furthermore, according to the radio communication system 10, when the UE 50 transitions from the 3G system 20 to the LTE system 30, the eNB 100B can transmit to the UE 50 the UE Capability Enquiry (capability enquiry) via which the UE Capability of the UE 50 is enquired, and acquire from the UE 50 the UE Capability that includes whether the UE 50 supports the the CE Mode (see Operation Example 3).

Therefore, even when the UE 50 has transited from the 3G system 20 which does not use the UE Radio Capability for Paging to the LTE system 30, appropriate paging can be executed with the UE 50.

However, because the existing UE Capability is the information relating to the capability that is used when the UE 50 is in the connected state (Active state, RRC_CONNECTED), it is acceptable if the UE 50 acquires the UE Capability when the state of the UE 50 changes from the Idle state to the connected state (Active state). In other words, when the UE 50 is in the Idle state, it is acceptable if the network side does not retain UE Capability of the UE 50.

On the other hand, because the UE Capability (such as ue-CategoryDL-v1310) included in the UE Radio Capability for Paging is the information on the capability that is used when the UE 50 is in the Idle state, even when the UE 50 is in the Idle state, it is necessary that the network side retains the UE Capability of the UE 50.

In the present embodiment, by using the UE Capability Info Indication, the eNB 100B can transmit to the MME 300 (or the SGSN 210) the UE Capability included in the UE Capability Information acquired from the UE 50 (see Operation Example 3).

Therefore, based on the UE Capability, the MME 300 can transmit to the eNB 100B an instruction to execute appropriate paging with the UE 50.

### (5) Other Embodiments

The present invention has been explained in detail by using the above mentioned embodiments; however, it is self-evident to a person skilled in the art that the present invention is not limited to the embodiments explained herein and that the embodiments can be modified or improved in various ways.

For example, in the embodiments explained above, an example in which the UE 50 corresponds to the BL UE (Cat.M) is explained. Alternatively, instead of Cat.M, the UE 50 can be UE for Narrow Band Internet of Things (NB-IoT).

Moreover, in the embodiments explained above, the SGSN 210 is cited as an example. Alternatively, other packet access control nodes (for example, Gateway GPRS Support Node (GGSN)) can be used.

Moreover, the block diagrams used for explaining the embodiments (FIGS. 2 and 3) show functional blocks. Those functional blocks (structural components) can be realized by a desired combination of hardware and/or software. Means for realizing each functional block is not particularly limited. That is, each functional block may be realized by one device combined physically and/or logically. Alternatively, two or more devices separated physically and/or logically may be directly and/or indirectly connected (for example, wired and/or wireless) to each other, and each functional block may be realized by these plural devices.

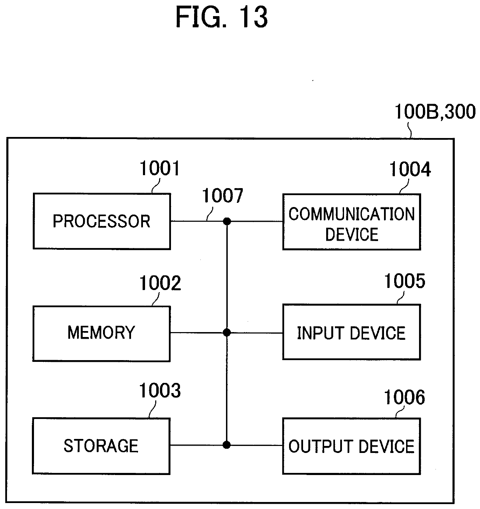

Furthermore, the eNB 100B and the eNB 100B (devices) explained above can function as a computer that performs the processing of the present invention. FIG. 13 is a diagram showing an example of a hardware configuration of these devices. As shown in FIG. 13, each of these devices can be configured as a computer device including a processor 1001, a memory 1002, a storage 1003, a communication device 1004, an input device 1005, an output device 1006, a bus 1007, and the like.

The functional blocks of the devices (see FIGS. 2 and 3) can be realized by any of hardware elements of the computer device or a desired combination of the hardware elements.

The processor 1001, for example, operates an operating system to control the entire computer. The processor 1001 can be configured with a central processing unit (CPU) including an interface with a peripheral device, a control device, a computing device, a register, and the like.

The memory 1002 is a computer readable recording medium and is configured, for example, with at least one of ROM (Read Only Memory), EPROM (Erasable Programmable ROM), EEPROM (Electrically Erasable Programmable ROM), RAM (Random Access Memory), and the like. The memory 1002 can be called register, cache, main memory (main memory), and the like. The memory 1002 can store therein a computer program (computer program codes), software modules, and the like that can execute the method according to the above embodiments.

The storage 1003 is a computer readable recording medium. Examples of the storage 1003 include an optical disk such as CD-ROM (Compact Disc ROM), a hard disk drive, a flexible disk, a magneto-optical disk (for example, a compact disk, a digital versatile disk, a Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

In addition, the manner of notification of information is not limited to the one explained in the embodiments, and the notification may be performed in other manner. For example, the notification of information can be performed by physical layer signaling (for example, DCI (Downlink Control Information), UCI (Uplink Control Information)), upper layer signaling (for example, RRC signaling, MAC (Medium Access Control) signaling, notification information (MIB (Master Information Block), SIB (System Information Block)), other signals, or a combination thereof. In addition, the RRC signaling can be called RRC message, and the RRC signaling can be, for example, RRC Connection Setup message, RRC Connection Reconfiguration message, and the like.

Furthermore, the input/output information can be stored in a specific location (for example, a memory) or can be managed in a management table. The information to be input/output can be overwritten, updated, or added. The information can be deleted after outputting. The inputted information can be transmitted to another device.

The order of the sequences, flowcharts, and the like in the embodiments can be rearranged unless there is a contradiction.

Moreover, in the embodiments explained above, the specific operations performed by the eNB 100B and the MME 300 can be performed by another network node (device). Moreover, functions of the eNB 100B and the MME 300 can be provided by combining a plurality of other network nodes.

Moreover, the terms used in this specification and/or the terms necessary for understanding the present specification can be replaced with terms having the same or similar meanings. For example, a channel and/or a symbol can be replaced with a signal (signal) if that is stated. Also, the signal can be replaced with a message. Moreover, the terms "system" and "network" can be used interchangeably.

Furthermore, the used parameter and the like can be represented by an absolute value, can be expressed as a relative value from a predetermined value, or can be represented by corresponding other information. For example, the radio resource can be indicated by an index.

The eNB 100B (base station) can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use RRH: Remote Radio Head).

The term "cell" or "sector" refers to a part or all of the coverage area of a base station and/or a base station subsystem that performs communication service in this coverage . In addition, the terms "base station" "eNB", "cell", and "sector" can be used interchangeably in the present specification. The base station can also be referred to as a fixed station, NodeB, eNodeB (eNB), gNodeB (gNB), an access point, a femtocell, a small cell, and the like.

The UE 50 is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

As used herein, the phrase "based on" does not mean "based only on" unless explicitly stated otherwise. In other words, the phrase "based on" means both "based only on" and "based at least on".

Furthermore, the terms "including", "comprising", and variants thereof are intended to be inclusive in a manner similar to "having". Furthermore, the term "or" used in the specification or claims is intended not to be an exclusive disjunction.

Any reference to an element using a designation such as "first", "second", and the like used in the present specification generally does not limit the amount or order of those elements. Such designations can be used in the present specification as a convenient way to distinguish between two or more elements. Thus, the reference to the first and second elements does not imply that only two elements can be adopted, or that the first element must precede the second element in some or the other manner.

Throughout the present specification, for example, during translation, if articles such as a, an, and the in English are added, these articles shall include plurality, unless it is clearly indicated that it is not so according to the context.

### INDUSTRIAL APPLICABILITY

As explained above, the present invention is useful in that, even when the BL UE transitions from the 3G (UMTS) to the LTE, appropriate paging can be executed with the BL UE.

### EXPLANATION OF REFERENCE NUMERALS

- 10: radio communication system
- 20: 3G system
- 30: LTE system
- 50: UE
- 100A: BTS
- 100B: eNB
- 110: radio communication unit
- 120: paging executing unit
- 130: transition controlling unit
- 140: capability information acquiring unit
- 150: capability enquiring unit
- 200: RNC
- 210: SGSN
- 300: MME
- 310: paging processing unit
- 320: UE capability information managing unit
- 330: UE capability information retaining unit
- 1001: processor
- 1002: memory
- 1003: storage
- 1004: communication device
- 1005: input device
- 1006: output device
- 1007: bus

## Claims

1. A radio base station (100B) usable in a radio communication system (10) that includes a first radio communication system (20) and a second radio communication system (30), and that constitutes the second radio communication system (30), wherein
the first radio communication system (20) does not retain capability information that indicates that a user device supports a coverage enhancement mode,
the second radio communication system (30) retains the capability information, and
the radio base station (100B) includes
a transition controlling unit (130) configured to control transition of the user device from the first radio communication system (20) to the second radio communication system (30); and
the radio base station **characterised by**,
a paging executing unit (120) configured to execute, when the transition controlling unit (130) transitions the user device to the second radio communication system (30), paging that corresponds to the coverage enhancement mode using a first transmission channel and paging that corresponds to a non-enhancement mode other than the coverage enhancement mode using a second transmission channel different from the first transmission channel.

2. The radio base station (100B) as claimed in claim 1, wherein the paging executing unit (120) is configured to execute either the paging that corresponds to the coverage enhancement mode or the paging that corresponds to the non-enhancement mode, and executes the other paging if the one executed first fails.

3. The radio base station (100B) as claimed in claim 2, wherein the paging executing unit (120) is configured to first execute the paging that corresponds to the non-enhancement mode.

4. A radio communication method that is implemented in a radio communication system (10) that includes a first radio communication system (20) and a second radio communication system (30), wherein
the first radio communication system (20) does not retain capability information that indicates that a user device supports a coverage enhancement mode,
the second radio communication system (30) retains the capability information, and
the radio communication method includes
controlling in which a radio base station (100B) that constitutes the second radio communication system (30) controls transition of the user device from the first radio communication system (20) to the second radio communication system (30); and
the method **characterised by**,
executing in which the radio base station (100B) executes paging that corresponds to the coverage enhancement mode using a first transmission channel and paging that corresponds to a non-enhancement mode other than the coverage enhancement mode using a second transmission channel different from the first transmission channel when the user device transitions to the second radio communication system (30).

## Patentansprüche

1. Funkbasisstation (100B), die in einem Funkkommunikationssystem (10) verwendbar ist, das ein erstes Funkkommunikationssystem (20) und ein zweites Funkkommunikationssystem (30) einschließt, und das das zweite Funkkommunikationssystem (30) bildet, wobei
das erste Funkkommunikationssystem (20) keine Fähigkeitsinformationen speichert, die anzeigen, dass eine Benutzervorrichtung einen Abdeckungsverbesserungsmodus unterstützt,
das zweite Funkkommunikationssystem (30) die Fähigkeitsinformationen speichert, und
die Funkbasisstation (100B) einschließt
eine Übergangssteuereinheit (130), die so konfiguriert ist, dass sie einen Übergang der Benutzervorrichtung von dem ersten Funkkommunikationssystem (20) zu dem zweiten Funkkommunikationssystem (30) steuert; und
wobei die Funkbasisstation **gekennzeichnet ist durch**,
eine Funkrufausführungseinheit (120), die so konfiguriert ist, dass sie, wenn die Übergangssteuereinheit (130) die Benutzervorrichtung zu dem zweiten Funkkommunikationssystem (30) übergehen lässt, einen Funkruf ausführt, der dem Abdeckungsverbesserungsmodus entspricht, unter Verwendung eines ersten Übertragungskanals, und einen Funkruf ausführt, der einem Nicht-Verbesserungsmodus entspricht, der sich von dem Abdeckungsverbesserungsmodus unterscheidet, unter Verwendung eines zweiten Übertragungskanals, der sich von dem ersten Übertragungskanal unterscheidet.

2. Funkbasisstation (100B) nach Anspruch 1, wobei die Funkrufausführungseinheit (120) so konfiguriert ist, dass sie entweder den Funkruf, der dem Abdeckungsverbesserungsmodus entspricht, oder den Funkruf, der dem Nicht-Verbesserungsmodus entspricht, ausführt, und den anderen Funkruf ausführt, wenn der zuerst ausgeführte fehlschlägt.

3. Funkbasisstation (100B) nach Anspruch 2, wobei die Funkrufausführungseinheit (120) so konfiguriert ist, dass sie zuerst den Funkruf ausführt, der dem Nicht-Verbesserungsmodus entspricht.

4. Funkkommunikationsverfahren, das in einem Funkkommunikationssystem (10) implementiert ist, das ein erstes Funkkommunikationssystem (20) und ein zweites Funkkommunikationssystem (30) einschließt, wobei
das erste Funkkommunikationssystem (20) keine Fähigkeitsinformationen speichert, die anzeigen, dass eine Benutzervorrichtung einen Abdeckungsverbesserungsmodus unterstützt,
das zweite Funkkommunikationssystem (30) die Fähigkeitsinformationen speichert, und
das Funkkommunikationsverfahren einschließt
Steuern, bei dem eine Funkbasisstation (100B), die das zweite Funkkommunikationssystem (30) bildet, einen Übergang der Benutzervorrichtung von dem ersten Funkkommunikationssystem (20) zu dem zweiten Funkkommunikationssystem (30) steuert; und
das Verfahren **gekennzeichnet durch**,
Ausführen, bei dem die Funkbasisstation (100B) einen Funkruf ausführt, der dem Abdeckungsverbesserungsmodus entspricht, unter Verwendung eines ersten Übertragungskanals, und einen Funkruf ausführt, der einem Nicht-Verbesserungsmodus entspricht, der sich von dem Abdeckungsverbesserungsmodus unterscheidet, unter Verwendung eines zweiten Übertragungskanals, der sich von dem ersten Übertragungskanal unterscheidet, wenn die Benutzervorrichtung zu dem zweiten Funkkommunikationssystem (30) übergeht.

## Revendications

1. Station de base radio (100B) utilisable dans un système de communication radio (10) qui inclut un premier système de communication radio (20) et un second système de communication radio (30), et qui constitue le second système de communication radio (30), dans laquelle
le premier système de communication radio (20) ne conserve pas d'informations de capacité qui indiquent qu'un dispositif utilisateur prend en charge un mode d'amélioration de couverture,
le second système de communication radio (30) conserve les informations de capacité, et
la station de base radio (100B) inclut
une unité de commande de transition (130) configurée pour commander la transition du dispositif utilisateur du premier système de communication radio (20) au second système de communication radio (30) ; et
la station de base radio étant **caractérisée par**,
une unité d'exécution de radiomessagerie (120) configurée pour exécuter, lorsque l'unité de commande de transition (130) fait passer le dispositif utilisateur au second système de communication radio (30), une radiomessagerie qui correspond au mode d'amélioration de couverture en utilisant un premier canal de transmission et une radiomessagerie qui correspond à un mode de non-amélioration autre que le mode d'amélioration de couverture en utilisant un second canal de transmission différent du premier canal de transmission.

2. Station de base radio (100B) selon la revendication 1, dans laquelle l'unité d'exécution de radiomessagerie (120) est configurée pour exécuter soit la radiomessagerie qui correspond au mode d'amélioration de couverture, soit la radiomessagerie qui correspond au mode de non-amélioration, et exécute l'autre radiomessagerie si celle exécutée en premier échoue.

3. Station de base radio (100B) selon la revendication 2, dans laquelle l'unité d'exécution de radiomessagerie (120) est configurée pour exécuter d'abord la radiomessagerie qui correspond au mode de non-amélioration.

4. Procédé de communication radio qui est mis en oeuvre dans un système de communication radio (10) qui inclut un premier système de communication radio (20) et un second système de communication radio (30), dans lequel
le premier système de communication radio (20) ne conserve pas d'informations de capacité qui indiquent qu'un dispositif utilisateur prend en charge un mode d'amélioration de couverture,
le second système de communication radio (30) conserve les informations de capacité, et
le procédé de communication radio inclut
une commande dans laquelle une station de base radio (100B) qui constitue le second système de communication radio (30) commande la transition du dispositif utilisateur du premier système de communication radio (20) au second système de communication radio (30) ; et
le procédé étant **caractérisée par**,
une exécution dans laquelle la station de base radio (100B) exécute une radiomessagerie qui correspond au mode d'amélioration de couverture en utilisant un premier canal de transmission et une radiomessagerie qui correspond à un mode de non-amélioration autre que le mode d'amélioration de couverture en utilisant un second canal de transmission différent du premier canal de transmission lorsque le dispositif utilisateur passe au second système de communication radio (30).
